Europäisches Patentamt

European Patent Office

Office européen des brevets

(11) Publication number: **0 270 307 B1**

# EUROPEAN PATENT SPECIFICATION

(45) Date of publication of patent specification: 27.03.91

(51) Int. Cl.⁵: **B62D 33/04, B62D 27/02**

(21) Application number: 87310451.7

(22) Date of filing: 26.11.87

The file contains technical information submitted after the application was filed and not included in this specification

(54) Improvements in and relating to a trailer roof.

(30) Priority: 01.12.86 GB 8628654

(43) Date of publication of application:
08.06.88 Bulletin 88/23

(45) Publication of the grant of the patent:
27.03.91 Bulletin 91/13

(84) Designated Contracting States:
AT BE CH DE ES FR GB GR IT LI LU NL SE

(56) References cited:
EP-A- 0 021 226
LU-A- 46 236

(73) Proprietor: YORK TRAILER COMPANY LIMITED
Yafforth Road
Northallerton North Yorkshire, DL7 8UE(GB)

(72) Inventor: Davis, Robert Clive Browning
Luton House 134 Front Street
Sowerby§Thirsk§North Yorkshire(GB)

(74) Representative: Allen, Oliver John Richard et al
Lloyd Wise, Tregear & Co. Norman House
105-109 Strand
London, WC2R 0AE(GB)

## Description

This invention relates to trailer roofs and particularly to means for attaching a roof cover to a trailer roof frame.

EP-A-0021226 relates to a roof frame having a complex clamping strip which clamps the sheet to the frame. The strip is particularly complicated in design and is therefore expensive to manufacture.

In known trailer roof assemblies, such as that disclosed in GB-A-1002670 (or LU-A-46236), the roof frame is covered by a sheet of suitable material which is secured to the frame by rivetting. This is a labour intensive operation since a large number of rivets are required to provide a good seal. Sealants and/or adhesives are commonly introduced between the cover sheet and frame to make the joint watertight.

A trailer according to the present invention has a roof construction comprising a frame and a cover supported by the frame, the cover being attached to the frame by a clip means which engages the frame tightly by its own inherent resilience (as it is known e.g. from LU-A-46236) and is characterised in that the clip means is packed with adhesive (14) and then positioned around the outer edges of the cover and the frame.

Packing the clip with adhesive before driving it into position on the frame, causes adhesive to extrude over every surface of the joint which increases the joint shear strength and ensures good sealing.

When the trailer roof is assembled the clip means are in positive engagement with the roof frame. Preferably adhesive is used between the cover and the frame. The clip serves the dual function of holding the cover to the frame while the adhesive sets and of removing peeling loads to which the adhesive is vulnerable. Shear loads between cover and frame are carried entirely by the adhesive.

The roof frame preferably consists of two side cant rails, a front cross-member, a rear cross-member and roof bows. This results in a glued roof joint which is resistant to peeling and which avoids the necessity of having to be clamped in jigs while the adhesive sets, resulting in time saving and consequent reduction of costs. An additional advantage is that the roof according to the invention has a continuous water seal along all the outer edges of the trailer roof. Further, the joint between the roof and trailer body is more resistant to loads in service than conventional roof/body joints.

The invention will now be described by way of example with reference to the accompanying drawings in which:

Figure 1    is a plan view of the roof of a trailer in accordance with the invention.

Figure 2    is a cross-section of a part of the trailer roof of Figure 1 taken along lines A-A.

Figure 3    is a cross section of a second embodiment of a trailer in accordance with the invention.

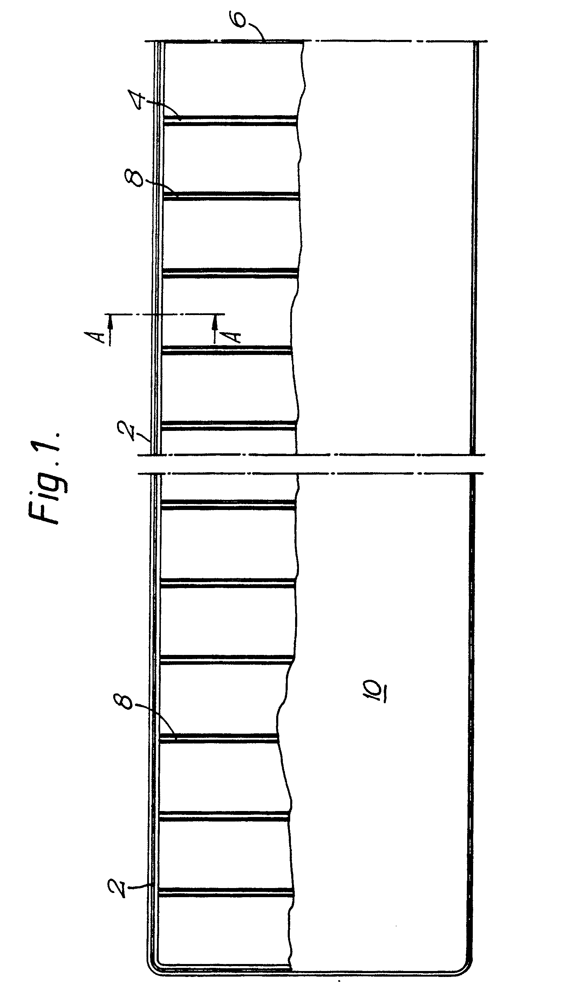

The trailer roof, shown in Figure 1, has a frame comprising two side cant rails 2, a front cross-member 4, a rear cross-member 6, and roof bows 8 which provide bracing across its width. The frame is covered by a roof covering 10 being a sheet of aluminium, fibreglass or other suitable material.

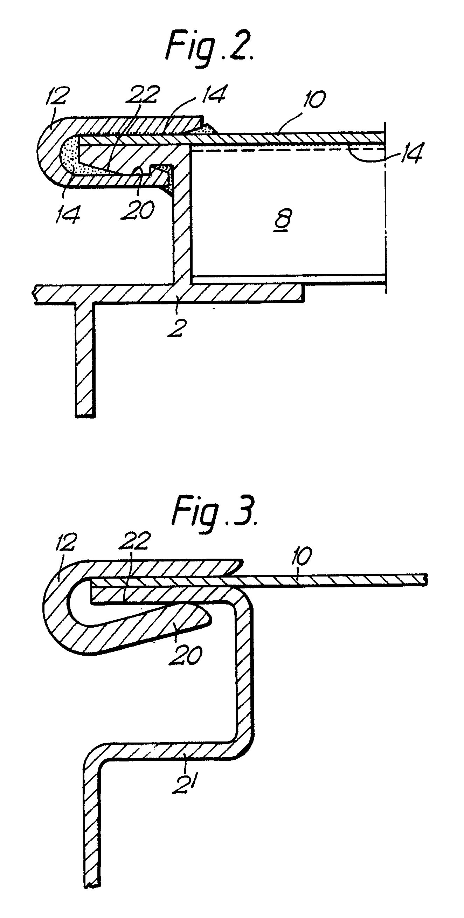

Figure 2 shows, in section, the roof covering 10 secured to the outer edge of the cant rail 2 by a clip l2 of aluminium, spring steel or the like. Layers of adhesive l4 are provided between the cant rail 2 and the covering 10, between the clip 12 and the covering 10, and optionally between the roof bows 8 and the covering 10.

In order to attach the covering 10 to the frame, a continuous run of adhesive 14 is placed along the outer edge of the cant rails 2, the front cross-member 4 and the rear cross-member 6. A run of adhesive may also be placed over the roof frame. Clips 12 packed with adhesive, are then positioned around the outer edges of the cant rails 2, front cross-member 4 and rear cross-member 6 with the roof covering 10 partly interposed as shown in Figure 2.

The design of the frame and the clip elements illustrated in Figure 2 is such that the inside lower edges of the clips have a detent 16 which rides up a sloping face 18 of the corresponding projection of the cant or end rail and then springs down behind a detent 20 of the rail to form a positive lock, thus preventing the roof covering from lifting and the clip elements from disengaging. The clip also serves to hold the roof covering against the frame whilst the adhesive sets giving a good joint. In the event of adhesive failure in use or the local absence of adhesive due to inefficient placing of the run of adhesive, the clip elements acts as a secondary mechanical restraint against the roof lifting. Since each clip element is formed as a strip of the same length as the appropriate side of the frame to which it is to be attached, a continuous water seal is provided along each of the outer edges of the roof frame.

In the modified arrangement shown in Figure 3 the cant rail 2' is of a constant thickness and so cannot form a detent 20 around which one end of the clip 12 can hook. In this arrangement the spring clip is formed in a slightly more closed position with a thicker but smoother inner end 20 which is positioned beneath and tightly engages the upper flange 22 of the cant rail.

The roof cover 10 is also firmly held in position by the clip together with the adhesive layer between the cover material and the cant rail and/or inner surface of the clip.

## Claims

1. A trailer having a roof construction comprising a frame and a cover supported by the frame, the cover being attached to the frame by a clip means which engages the frame tightly by its own inherent resilience characterised in that the clip means (12) is packed with adhesive (14) and then positioned around the outer edges of the cover (10) and the frame (12).

2. A trailer as claimed in claim 1 characterised in that the cover is stuck to the frame at least at the outer edges of the frame by means of adhesive with the clip (12) engaging the edge of the frame and the overlapping roof cover (10) to hold the roof cover edge tightly in contact with the edge frame.

3. A trailer as claimed in any one of the preceding claims characterised in that the clip (12) is in the form of a strip extending along the whole length of the outer edges of the roof frame.

4. A trailer as claimed in any one of the preceding claims characterised in that the clip is of U-section with the leg of the U which in use engages beneath a flange of the outer rail of the roof frame, being formed with a detent (16) to engage with a corresponding detent (20) on the edge of the flange of the cant rail firmly to lock the clip (12) in position.

## Revendications

1. Remorque dont la structure du toit comporte un cadre et une couverture portée par le cadre, la couverture étant rattachée au cadre par des moyens à pince solidement serrés dans le cadre par leur élasticité inhérente caractérisée en ce que la pince (12) est bourrée d'adhésif (14) puis située aux bords extérieurs de la couverture (10) et du cadre (12).

2. Remorque selon la revendication 1 caractérisée en ce que la couverture est collée au moyen d'adhésif au moins aux bords extérieurs du cadre, la pince (12) retenant le bord du cadre et la couverture chevauchante du toit (10) le bord du toit de couverture étant ainsi maintenu en contact avec le cadre de bordure.

3. Remorque selon l'une ou l'autre des revendications antérieures caractérisée en ce que la pince (12) est sous forme de profil plat sur toute la longueur des bords extérieurs du cadre de toit.

4. Remorque selon l'une ou l'autre des revendications antérieures caractérisée en ce que le moyen à pince est sous forme de profil-U dont le membre en service est fixé sous une bride du rail extérieur de cadre de toit, avec un moyen d'arrêt (16) qui s'engage avec un moyen d'arrêt correspondant (20) sur le bord de la bride de rail latéral de manière à solidement la pince (12) en position.

## Ansprüche

1. Anhänger mit einer Dachkonstruction, die einen Rahmen und einen Überzug, der von dem Rahmen unterstützt wird, enthält, der Überzug ist an dem Rahmen mit einer Klemmeinrichtung, die in den Rahmen fest durch ihre eigene zugehörige Federung einrastet, angebracht, dadurch gekennzeichnet, dass die Klemmeinrichtung (12) mit Klebstoff (14) gefüllt wird, und dann um die äusseren Kanten des Überzugs (10) und des Rahmens (12) gelegt wird.

2. Anhänger nach Anspruch 1, dadurch gekennzeichnet, dass der Überzug wenigstens an den äusseren Kanten des Rahmens mit Hilfe von Klebstoff angeklebt ist, wobei die Klemme (12) in die Kante des Rahmens und den Überlappenden Dachüberzug (10) einrastet, um die Dachüberzugskante fest in Kontakt mit dem Kantenrahmen zu halten.

3. Anhänger nach einem der vorhergehenden Ansprüche, dadurch gekennzeichnet, dass die Klemme (12) in der Gestalt einer Leiste ist, die sich entlang der ganzen Länge der äusseren Kanten des Dachrahmens erstreckt.

4. Anhänger nach einem der vorhergehenden Ansprüche, dadurch gekennzeichnet, dass die Klemme ein U-Profil hat, wobei der Schenkel des Us, der unter einen Flansch der äusseren Schiene des Dachrahmens während des Gebrauchs einrastet, mit einem Haken (16) gestaltet ist, um mit einem entsprechenden Haken (20) fest auf der Kante des Flansches der Kantenschiene zur Sicherung der Klemme in der richtigen Lage einzurasten.

# Fig.1.

Fig.2.

Fig.3.